# NEUE EUROPÄISCHE PATENTSCHRIFT

(11) **EP 3 403 487 B2**
(45) Veröffentlichungstag und Bekanntmachung des Hinweises auf die Entscheidung über den Einspruch: **16.11.2022**
(45) Hinweis auf die Patenterteilung: 04.12.2019
(21) Anmeldenummer: 18160386.1
(22) Anmeldetag: 07.03.2018
(51) Int. Cl.: A01F 25/16, A01F 25/18, A01B 69/00, G05D 1/02

(54) **VERFAHREN ZUM VERDICHTEN VON IN EINEM SILO BEFINDLICHEN ERNTEGUT**
METHOD FOR COMPACTING HARVESTED CROPS LOCATED IN A SILO
PROCÉDÉ DE COMPACTAGE D'UN PRODUIT RÉCOLTÉ SE TROUVANT DANS UN SILO

(30) Priorität: 15.05.2017 DE 102017110471
(43) Veröffentlichungstag der Anmeldung: 21.11.2018
(73) Patentinhaber: CLAAS KGaA mbH, 33428 Harsewinkel (DE)
(72) Erfinder: Nacke, Eberhard, 33332 Gütersloh (DE); Balbach, Florian, 33330 Gütersloh (DE)
(74) Vertreter: CLAAS Gruppe

(56) Entgegenhaltungen:
- EP-A1- 0 767 112
- EP-A1- 1 795 884
- EP-A1- 2 198 688
- EP-A1- 2 591 659
- WO-A1-2016/209118
- WO-A1-2017/026080
- DE-A1- 10 317 160
- DE-A1-102007 053 610
- DE-T5-112016 000 130
- DE-U1-202010 006 957
- US-A- 5 471 391
- US-A- 6 112 143
- US-A1- 2007 129 869
- T. HOFFMANN et al.: "Radiometrie density measurement for silage compaction in bunker silos", Agric Eng Int: CIGR Journal, vol. 15, no. 3, September 2013 (2013-09), pages 191-197,
- Tölle Rainer, Häbler Jan, Hahn Jürgen: "Gute Verdichtung im Silo - der Schlüssel zu hoher Konservatqualität", Bornimer Agrartechnische Berichte, Institut f?r Agrartechnik Bornim e.V., Potsdam-Bornim, vol. 68, 1 January 2009 (2009-01-01), pages 25-34, Potsdam-Bornim ISSN: 0947-7314
- Anonymous: "The future of autonomous compaction has already begun", World Highways, 1 December 2016 (2016-12-01), pages 59-61,
- Gerighausen: "Silieren: Drei Fehler, die sich immer rächen", Top Agrar, 1 April 2004 (2004-04-01), pages 104-107,

## Beschreibung

Die vorliegende Anmeldung betrifft ein Verfahren zur Befüllung eines Silos mit zu lagerndem Erntegut, insbesondere eines Flachsilos mit gehäckseltem Mais, Gras und dergleichen, umfassend die folgenden Verfahrensschritte:
a) Das zu lagernde Erntegut wird in dem Silo verteilt.
b) Das in dem Silo befindliche Erntegut wird mittels mindestens einer Verdichtungsmaschine zumindest für die Dauer eines Verdichtungszeitraums fortwährend überfahren, wobei zumindest eine Gewichtskraft der Verdichtungsmaschine auf das Erntegut einwirkt.
c) Zumindest mittels Wirkung der Gewichtskraft der Verdichtungsmaschine wird das Erntegut verdichtet.

Bei dem Silo kann es sich im Sinne der vorliegenden Anmeldung insbesondere um ein sogenanntes Flachsilo handeln, das zur Lagerung von Erntegut typischerweise verwendet wird. Dies betrifft insbesondere solche Fälle, in denen das Erntegut über einen längeren Zeitraum hinweg als Futtermittel vorgehalten werden soll, wobei das Erntegut in dem Silo verdichtet wird, um Lufteinschlüsse zu eliminieren. Nach abgeschlossener Verdichtung bzw. vollständiger Verfüllung des Silos wird das Erntegut zur Umgebung hin typischerweise mittels einer Abdeckschicht, beispielsweise einer Siloplane, abgedichtet, sodass ein unmittelbarer Austausch von Sauerstoff zwischen dem Erntegut und der Umgebung unterbunden ist. Auf diese Weise wird verhindert, dass das gelagerte Erntegut verrottet.

Als Verdichtungsmaschinen werden typischerweise Traktoren, Radlader, Walzen oder dergleichen verwendet. Von besonderer Bedeutung ist eine vergleichsweise hohe Gewichtskraft, die von einer Verdichtungsmaschine ausgeübt werden sollte, um die gewünschte Verdichtungsleistung zu erzielen. Ferner können Verdichtungsmaschinen unterstützend eine Vibrationsfunktion aufweisen, die die Verdichtungsleistung spürbar erhöht. Die Verwendung eines Traktors wird insoweit in aller Regel bevorzugt, als ein solcher ohne Weiteres mit einem Frontlader, Schiebeschild oder dergleichen ausgestattet werden kann, sodass der Traktor neben einer reinen Verdichtungsfunktion für das zu lagernde Erntegut ferner eine Verteilfunktion erfüllen kann. Diese beinhaltet insbesondere die Verteilung von an dem Silo angeliefertem Erntegut auf der Silofläche.

Die Befüllung eines Silos mit anschließender Verdichtung des jeweiligen Ernteguts ist im Stand der Technik bereits weitlich bekannt. Ein Verbesserungsbedarf der an sich bewährten Vorgehensweise besteht insofern, als die Organisation des gesamten Befüllungsprozesses im Stand der Technik in aller Regel nicht optimal gestaltet ist. Dies betrifft insbesondere eine Sicherstellung von ausreichend erbrachter Verdichtungsleistung als auch den Einbauprozess des zu verdichtenden Ernteguts in dem Silo. Letzterer ist im Stand der Technik oftmals von fehlerhafter Vorgehensweise geprägt, wobei beispielsweise Erntegut nicht in korrekter Weise und/oder an korrekter Stelle in das Silo eingebracht wird.

Eine Möglichkeit zur besseren Kontrolle des Verdichtungsprozesses offenbart beispielsweise die Europäische Patentanmeldung EP 2 198 688 A1. Diese befasst sich mit der Überwachung einer Höhenlage einer Oberfläche des zu verdichtenden Ernteguts, wobei die Zielsetzung der genannten Schrift darin besteht, einen jeweiligen Verdichtungsabschnitt lediglich so lange mittels einer Verdichtungsmaschine zu bearbeiten, wie dies auch notwendig ist. Mithin wird die Verdichtung einer jeweiligen Erntegutschicht abgebrochen, sobald über die jeweilige Erntegutschicht hinweg eine bestimmte Höhendifferenz der Oberfläche unterschritten ist. Die bekannte Vorgehensweise unterstützt zwar die Entscheidungsfindung über den veranschlagten Verdichtungszeitraum, trägt jedoch nicht darüber hinaus zur Verbesserung des Verfahrens zur Befüllung eines Silos bei.

Der vorliegenden Anmeldung liegt mithin die Aufgabe zugrunde, ein Verfahren bereitzustellen, mittels dessen die Befüllung eines Silos grundsätzlich optimierbar ist.

Aus der EP 2 591 659 A1 ist ein Verdichterfahrzeug bekannt, bei dem der Bordcomputer des Verdichterfahrzeugs aktiv in dessen Lenkung eingreifen kann, um anhand der gesammelten Daten über die bisherige Bewegung des Verdichterfahrzeugs dieses gezielt auf jene Bereiche der Silooberfläche zu lenken, die noch nicht oft genug überfahren worden sind, um ausreichend verdichtet zu sein.

Die zugrunde liegende Aufgabe wird ausgehend von dem Verfahren der eingangs beschriebenen Art erfindungsgemäß mit den kennzeichnenden Merkmalen des Anspruch 1 gelöst.

Unter einem "autonomen Betrieb" einer Verdichtungsmaschine wird im Sinne der vorliegenden Anmeldung verstanden, dass die Verdichtungsmaschine vollständig ohne den Eingriff menschlicher Verstandestätigkeit eigenständig agiert. "Autonomer Betrieb" verlangt nicht notwendigerweise einen eigenständigen Betrieb der Verdichtungsmaschine vollständig losgelöst von jeglicher externen Kontrolle. Insbesondere ist es nicht erforderlich, dass ein Arbeitsablauf der autonomen Verdichtungsmaschine ausschließlich auf Basis von der Verdichtungsmaschine selbst erhobenen Daten mittels einer eigenen Steuerungseinrichtung geplant und ausgeführt wird. Stattdessen kann die Steuerungseinrichtung auch aus anderer Quelle mit Daten und Vorgaben versorgt werden und von diesen abhängen, die sodann lediglich an die Verdichtungsmaschine weitergeleitet und sodann von letzterer autonom umgesetzt werden.

Unter einer "Steuerungseinrichtung" ist dementsprechend eine Einrichtung zu verstehen, die dazu geeignet ist, Daten an die autonome Verdichtungsmaschine zu übertragen, insbesondere die Verdichtungsmaschine zu befehligen. Beispielsweise kann die Steuerungseinrichtung der Verdichtungsmaschine eine Fahrroute vorgeben und/oder weitere Betriebsdaten an die Verdichtungsmaschine übertragen. Umgekehrt kann eine Datenübertragung ausgehend von der Verdichtungsmaschine zu der Steuerungseinrichtung vorgenommen werden, wodurch vorteilhafterweise die Verdichtungsmaschine eine Rückmeldung an die Steuerungseinrichtung geben kann. Dies kann beispielsweise den Zustand des zu verdichtenden Ernteguts betreffen, wie nächstehend noch gesondert ausgeführt wird.

Grundsätzlich ist es unerheblich, ob die Steuerungseinrichtung unmittelbar in, an oder auf der Verdichtungsmaschine angeordnet ist oder extern stationiert ist, beispielsweise in räumlicher Nähe zu dem jeweiligen Silo. Eine Kommunikation einer externen Steuerungseinrichtung mit der autonomen Verdichtungsmaschine kann insbesondere über Funk vorgenommen werden.

Der vorliegenden Erfindung liegt die Idee zugrunde, das Verfahren zur Befüllung eines Silos grundsätzlich von dem Einfluss eines menschlichen Fehlers zu befreien. Entsprechend bietet die vorliegende Erfindung eine Reihe von Vorteilen, wobei insbesondere sichergestellt ist, dass die Verdichtung des Ernteguts innerhalb des Silos einem vorgegebenen Plan autonom folgen kann. Dieser Plan wird von der Steuerungseinrichtung vorgegeben und wird von der Verdichtungsmaschine in der vorgegebenen Weise ausgeführt. Dies kann beispielsweise eine Verteilung der Verdichtungsleistung über eine Silofläche hinweg sowie die Einhaltung des Verdichtungszeitraums betreffen. Letztlich kann mittels der autonomen Betriebsweise der Verdichtungsmaschine die Effizienz des Verfahrens besonders einfach gesteigert werden.

Weiterhin ergeben sich Sekundäreffekte, da beispielsweise die Verkürzung des Verdichtungszeitraums für eine jeweils zu verdichtende Erntegutschicht unmittelbar mit der Reduzierung des Energieverbrauchs der Verdichtungsmaschine einhergeht. Sofern letztere beispielsweise mittels eines Verbrennungsmotors angetrieben wird, führt die autonome Betriebsweise der Verdichtungsmaschine indirekt zur Reduktion von Kraftstoffkosten.

Weiterhin erlaubt die zügigere Verdichtung des Ernteguts mittels der erfindungsgemäßen Verdichtungsmaschine eine insgesamt kürzere Verweildauer des Ernteguts in unmittelbarem Kontakt mit dem Sauerstoff der Umgebungsluft. Letzterer sollte vorzugsweise möglichst kurz gehalten werden, um Oxidationsprozesses des Ernteguts zu vermeiden. Die nunmehr verkürzte Verdichtungsdauer hilft folglich dabei, das jeweilige Silo zügiger fertigzustellen und mittels einer Abdeckplane gegenüber der Umwelt zu verschließen als dies im Stand der Technik der Fall ist.

Ein weiterer Vorteil des erfindungsgemäßen Verfahrens besteht darin, dass der im Grunde genommen vergleichsweise repetitive Verdichtungsprozess des in dem Silo eingelagerten Ernteguts nicht länger von einer extra hierfür abgestellten Arbeitskraft vorgenommen werden muss, sondern selbstständig bzw. autonom von der Verdichtungsmaschine ausgeführt werden kann. Hierdurch kann die Wirtschaftlichkeit des Verfahrens weiter gesteigert werden.

Das erfindungsgemäße Verfahren ist dann von besonderem Vorteil, wenn das Erntegut mittels einer Mehrzahl gleichzeitig autonom arbeitender Verdichtungsmaschinen verdichtet wird. Die Verwendung einer Mehrzahl von Verdichtungsmaschinen führt zunächst zu einer entsprechenden Steigerung der auf das Erntegut ausgeübten Verdichtungsleistung. Dies führt wiederum dazu, dass ein jeweils gewünschtes Verdichtungsergebnis in deutlich kürzerer Zeit erreicht wird.

Diese zeitliche Komponente ist zum einen unter dem oben genannten Aspekt des zügigen Verschlusses des Silos von Bedeutung. Zum anderen bewirkt eine beschleunigte Verdichtung des Ernteguts, dass ein "Verdichtungsstau" an dem jeweilig zu befüllenden Silo, der eine empfindliche Verzögerung des Ernteprozesses zur Folge haben kann, möglichst vermieden wird. Dies liegt darin begründet, dass die Arbeitskette von Transportfahrzeugen, die das Erntegut von einem Erntefahrzeug, beispielsweise einem Feldhäcksler, zu dem Silo transportieren, gestört wird, sobald das bereits an dem Silo angelieferte, jedoch noch nicht weiter verarbeitete Erntegut nicht zügig genug in das Silo eingebracht wird. Die Erhöhung der Verdichtungsleistung in dem Silo hilft dabei, das angelieferte Erntegut zügiger in das Silo einzubringen und folglich die beschriebene Arbeitskette der Transportfahrzeuge möglichst wenig, vorzugsweise gar nicht, zu stören. Insbesondere ist es mittels der Verwendung mehrerer Verdichtungsmaschinen zumindest weniger häufig notwendig, eine Arbeitsgeschwindigkeit des Erntefahrzeugs bewusst zu reduzieren.

Von besonderem Vorteil ist die Verwendung von genau zwei autonom betriebenen Verdichtungsmaschinen, die für die Bearbeitung von Silos typischer Größe in aller Regel ausreichen. Die Verwendung von mehr als zwei Verdichtungsmaschinen könnte demgegenüber zu einem deutlich überproportionalen Anstieg von Konflikten zwischen den Verdichtungsmaschinen führen, beispielsweise hinsichtlich deren Fahrrouten.

Grundsätzlich ist es denkbar, dass bei der Verwendung mehrerer autonomer Verdichtungsmaschinen selbige jeweils mittels einer eigenen Steuerungseinrichtung gesteuert werden. Gleichwohl ist es von besonderem Vorteil, wenn eine einzige zentrale Steuerungseinrichtung die Steuerung sämtlicher autonomer Verdichtungsmaschinen übernimmt. Insbesondere können auf diese Weise Betriebsparameter der Verdichtungsmaschinen mittels der einzigen Steuerungseinrichtung aufeinander abgestimmt werden. Somit ist es bei der Verwendung mehrerer Verdichtungsmaschinen von besonderem Vorteil, wenn diese jeweils Arbeitsdaten an die Steuerungseinrichtung übermitteln, sodass die Steuerungseinrichtung die Arbeitsabläufe der Verdichtungsmaschinen in Abhängigkeit der übermittelten Arbeitsdaten koordinieren kann. Bei diesen Arbeitsdaten kann es sich insbesondere um Sensordaten und/oder Bewegungsdaten der Verdichtungsmaschinen handeln. Die Sensordaten können insbesondere mittels mindestens eines Sensors mindestens einer Verdichtungsmaschine erfasst werden, wobei der Betrieb der Verdichtungsmaschinen von einer Vielzahl verschiedener Parameter abhängig gemacht werden kann. Dies ist nachstehend gesondert erläutert.

Überdies ist die Übermittlung von Bewegungsdaten von den Verdichtungsmaschinen an die Steuerungseinrichtung besonders vorteilhaft, sodass die Steuerungseinrichtung insbesondere Fahrrouten der Verdichtungsmaschinen koordinieren kann. Auf diese Weise können sowohl Konflikte zwischen den Fahrrouten minimiert, als auch die Überfahrhäufigkeit sämtlicher Stellen des Silos derart optimiert werden, dass nach Möglichkeit sämtliche Stellen zumindest im Wesentlichen gleich oft überfahren werden. Diese Verfahrensweise entspricht einer möglichst gleichmäßigen Verteilung der Verdichtungsleistung der Verdichtungsmaschinen auf die jeweilig zu verdichtende Erntegutschicht des Silos. Ebenso ist es denkbar, dass die Verdichtungsmaschinen bestimmte Stellen bewusst öfter überfahren als andere, falls zum Beispiel ein Gutparameter des Ernteguts an bestimmten Stellen dies verlangen.

Bei der Verwendung zweier oder mehrerer autonomer Verdichtungsmaschinen kann es weiterhin vorteilhaft sein, wenn eine der Verdichtungsmaschinen gegenüber den übrigen Verdichtungsmaschinen von der Steuerungseinrichtung bevorzugt behandelt wird. Diese bevorzugte Behandlung beinhaltet die Bevorteilung der bevorzugten Verdichtungsmaschine im Falle eines Konflikts zwischen Arbeitsabläufen verschiedener Verdichtungsmaschinen. Besagte Bevorteilung wird dadurch umgesetzt, dass der Arbeitsablauf der bevorzugten Verdichtungsmaschine Vorrang vor den Arbeitsabläufen der Benachteiligten Verdichtungsmaschinen hat. Insbesondere können die Arbeitsabläufe der Benachteiligten Verdichtungsmaschinen zum Vorteil der bevorzugten Verdichtungsmaschine zumindest zeitweise unterbrochen werden. Mit anderen Worten nimmt die bevorzugte Verdichtungsmaschine innerhalb des Schwarms sämtlicher autonomer Verdichtungsmaschinen die Position des sogenannten "Masters" ein, während die übrigen Verdichtungsmaschinen als sogenannte "Slaves" konfiguriert sind.

Ein typisches Beispiel für eine derartige Bevorteilung des Masters ist eine Vorfahrtsregelung zu seinen Gunsten, wobei der Master im Falle eines Konflikts zwischen seiner Fahrroute mit derjenigen eines Slaves ungehindert und ohne Unterbrechung weiterfahren darf, während der Slave zumindest gebremst wird, möglicherweise sogar vollständig angehalten wird.

Erfindungsgemäß steuert die Steuerungseinrichtung die Verdichtungsmaschine bzw. Verdichtungsmaschinen in Abhängigkeit mindestens eines Siloparameters. Unter einem "Siloparameter" können sämtliche Parameter verstanden werden, die entweder das Silo gemeinsam mit dem darin befindlichen Erntegut oder das in dem Silo befindliche Erntegut als solches oder das an dem Silo angelieferte Erntegut beschreiben. Siloparameter, die für die Steuerung der Verdichtungsmaschinen von besonderer Bedeutung sind, sind die jeweils aktuelle Silohöhe und/oder ein Gutparameter des Ernteguts, insbesondere des gerade angelieferten, jedoch noch nicht eingebauten Ernteguts. Weiterhin kann eine Dicke einer im Entstehen begriffenen, noch nicht vollständig verdichteten bzw. fertiggestellten Erntegutschicht einen Siloparameter darstellen.

Dabei wird unter der "Silohöhe" die aktuelle, vom Siloboden aus gemessene Gesamthöhe des bereits in dem Silo angehäuften Ernteguts verstanden. Das bedeutet, dass die Silohöhe in jedem Fall die Höhe der aktuell bearbeiteten Erntegutschicht beschreibt, die in unmittelbaren Kontakt mit der/den Verdichtungsmaschine(n) tritt. Die "Gutparameter" können sämtliche Parameter betreffen, die das Erntegut als solches beschreiben. Hierunter sind insbesondere, jedoch nicht abschließend, die folgenden Parameter zu verstehen:
- ein Rückstellverhalten des Ernteguts;
- eine Dichte des Ernteguts;
- ein Porenvolumen des Ernteguts;
- ein Wassergehalt des Ernteguts;
- ein Trockenmasse des Ernteguts;
- eine durchschnittliche Partikelgröße des Ernteguts.

Insbesondere kann die Steuerungseinrichtung die Verdichtungsleistung der Verdichtungsmaschinen verändern, erfindungsgemäß in Abhängigkeit von dem Porenvolumen und/oder von der Trockenmasse des Ernteguts und/oder der Silohöhe abhängig gemacht werden. Die Verdichtungsleistung kann beispielsweise mittels Veränderung des Verdichtungszeitraums erreicht werden. Ebenso ist es denkbar, zusätzlich zu einer reinen Eigengewichtsverdichtung an der bzw. den Verdichtungsmaschine(n) eine Vibrationsfunktion zu aktivieren, um die Verdichtungsleistung mittels eines dynamischen Verdichtungsanteils zu steigern. Zur Erzeugung einer Vibration kann die autonome Verdichtungsmaschine beispielsweise mit mindestens einem Exzenter ausgestattet sein. Andere Möglichkeiten zur Veränderung der Verdichtungsleistungen sind grundsätzlich selbstverständlich ebenso denkbar. Somit kann beispielsweise ein Schlupf in Form einer Differenz zwischen Drehzahlen einer Vorder- und einer Hinterachse einer Verdichtungsmaschine, aktiv eingebracht werden. Ferner ist eine Veränderung der Aufstandsfläche der Verdichtungsmaschine denkbar, beispielsweise mittels Erhöhung oder Verringerung eines Reifendrucks eines oder mehrerer Reifen einer jeweiligen Verdichtungsmaschine.

Mindestens ein, vorzugsweise mehrere, Gutparameter des Ernteguts werden vorteilhafterweise unmittelbar mittels der Verdichtungsmaschine erhoben, wobei selbige mit mindestens einem Sensor zur Ermittlung mindestens eines Gutparameters ausgestattet ist. Die Verdichtungsmaschine kann den jeweils ermittelten Gutparameter an die Steuerungseinrichtung übertragen, sodass letztere diesen entsprechend berücksichtigen kann. Vorteilhafterweise findet eine Erhebung mitsamt Weiterleitung mindestens eines Gutparameters fortwährend statt, sodass zu jeder Zeit der Steuerungseinrichtung aktuelle Informationen über den Zustand des Ernteguts vorliegen.

In einer besonders vorteilhaften Ausgestaltung des erfindungsgemäßen Verfahrens weist die Steuerungseinrichtung mindestens eine Datenverbindung mit mindestens einem Erntefahrzeug, insbesondere einen Feldhäcksler, auf. Bei dem Erntefahrzeug handelt es sich um dasjenige Fahrzeug, mittels dessen das Erntegut ursprünglich produziert wird. Insbesondere kann das Erntefahrzeug dazu geeignet sein, Pflanzen zu ernten und sodann zu zerkleinern, sodass das Erntegut letztlich aus einer zumindest im Wesentlichen homogenisierten Masse der zerkleinerten Pflanzen besteht. Mittels der Datenverbindung zwischen der Steuerungseinrichtung und dem Erntefahrzeug ist es ersterer ermöglicht, in Abhängigkeit mindestens eines Siloparameters Daten an das Erntefahrzeug zu übermitteln. Insbesondere kann die Steuerungseinrichtung zumindest eine Information an einen Maschinenführer des Erntefahrzeugs absetzen, um diesen über den Zustand des Ernteguts und/oder des Befüllungsprozesses des Silos zu informieren, sodass der Maschinenführer auf Basis dieser Information seine Arbeitsweise und/oder einen Betriebsparameter des Erntefahrzeugs anpassen kann.

Die Weitergabe der Information seitens der Steuerungseinrichtung kann dabei auf die schlichte Mitteilung des jeweiligen Gutparameters beschränkt sein oder bereits eine in Abhängigkeit des Gutparameters erarbeitete Handlungsempfehlung beinhalten. Somit ist es beispielsweise denkbar, dass die Steuerungseinrichtung den Maschinenführer des Erntefahrzeugs darüber informiert, dass das Silo bereits zu 70 % gefüllt ist, woraus der Maschinenführer eigenständig den Rückschluss ziehen kann, dass die Partikelgröße des Ernteguts fortan reduziert werden sollte, um eine hinreichende Verdichtung der noch ausstehenden oberen Erntegutschichten des Silos sicherstellen zu können. Alternativ ist es denkbar, dass die Steuerungseinrichtung dem Maschinenführer lediglich mitteilt, bitte die Partikelgröße des Ernteguts zu reduzieren.

Noch darüber hinaus besteht die Möglichkeit, dass die Steuerungseinrichtung unmittelbar auf mindestens einen Betriebsparameter des Erntefahrzeugs einwirkt bzw. selbigen verändert. In diesem Fall würde der Maschinenführer womöglich lediglich informiert werden, dass fortan der jeweils betroffene Betriebsparameter automatisch verändert wurde, worin eine weitere Automatisierung des Verfahrens zur Befüllung des Silos insgesamt zu sehen ist.

Soweit eine Datenübertragung von der Steuerungseinrichtung auf das Erntefahrzeug vorgenommen wird, ist es besonders vorteilhaft, wenn die Steuerungseinrichtung in Abhängigkeit von einer Länge des Verdichtungszeitraums zumindest mittelbar auf eine Anpassung der Arbeitsgeschwindigkeit des Erntefahrzeugs hinwirkt. Somit ist es beispielsweise denkbar, dass in einer logischen Abfolge zunächst aufgrund eines ermittelten Gutparameters des Ernteguts die Steuerungseinrichtung eine Verlängerung des Verdichtungszeitraums bewirkt und infolgedessen daraufhin wirkt, dass das Erntefahrzeug seine Arbeitsgeschwindigkeit verringert. Letzteres soll dazu führen, dass ein Massenstrom von neuem, zusätzlich in das Silo einzubringen Ernteguts verringert wird, indem das Erntefahrzeug das Erntegut langsamer produziert. Auf diese Weise kann ohne Beeinträchtigung der Arbeitskette der Transportfahrzeuge eine hinreichende Verdichtungsleistung in dem Silo sichergestellt werden.

Das erfindungsgemäße Verfahren weiter ausgestaltend erfüllt die mindestens eine autonome Verdichtungsmaschine neben ihrer Verdichtungsfunktion ferner eine Verteilfunktion, indem sie bereits angeliefertes, jedoch noch unverdichtetes Erntegut autonom in dem Silo verteilt. Diese Verteilung erfolgt derart, dass sich eine unverdichtete Erntegutschicht bildet. Dabei ist es beispielsweise denkbar, dass die Verdichtungsmaschine unter Vorgabe einer zu erzielenden Schichthöhe der jeweils im Entstehen begriffenen Erntegutschicht unverdichtetes Material aufträgt und sodann nach Erreichen besagter Schichthöhe automatisch die Verdichtung derselben beginnt. Auch ist es denkbar, dass die Steuerungseinrichtung eine Schichthöhe von verdichtetem Erntegut vorgibt und die Verdichtungsmaschine fortwährend Material einbringt und verdichtet, bis die vorgegebene Schichthöhe erreicht ist. Weiterhin ist es denkbar, dass eine gestaffelte Bearbeitung einer jeweiligen Silofläche vorgenommen wird, wobei insbesondere verschiedene Bereiche des Silos bearbeitet werden. Somit ist es denkbar, dass zunächst eine erste Hälfte einer neu zu erstellenden Erntegutschicht eingebracht und verdichtet wird und erst im Anschluss die jeweils zweite Hälfte. In jedem Fall kann die erfindungsgemäße Verdichtungsmaschine unter Wahrnehmung auch einer Verteilfunktion neben der Verdichtung des Ernteguts ferner die Befüllung des Silos vollständig autonom bewerkstelligen.

Dabei kann es besonders von Vorteil sein, wenn die Schichthöhe einer jeweiligen Erntegutschicht in Abhängigkeit mindestens eines Gutparameters gesteuert wird. Für die Einstellung der Schichthöhe kann insbesondere der Wassergehalt des Ernteguts und/oder die Silohöhe und/oder eine durchschnittliche Partikelgröße des Ernteguts herangezogen werden. Letztere kann je nach angestrebtem Verwendungszweck des Ernteguts im Bereich zwischen 5 mm und 40 mm liegen. Dabei gilt, dass umso feineres Erntegut umso weniger stark verdichtet werden muss.

Sofern die Verdichtungsmaschine mit mindestens einer Verteileinrichtung, insbesondere einem Schiebeschild, ausgestattet ist, kann die Steuerungseinrichtung in einer weiterhin vorteilhaften Ausgestaltung des erfindungsgemäßen Verfahrens eine Arbeitsstellung der Verteileinrichtung steuern, und zwar insbesondere in Abhängigkeit einer jeweils zu erreichenden Schichthöhe der Erntegutschicht. Insbesondere kann die Arbeitsstellung bei einem Schiebeschild dessen Arbeitshöhe betreffen, wobei eine umso niedrigere Arbeitshöhe zu einer umso flacheren Ausgestaltung der jeweiligen Erntegutschicht führt und umgekehrt eine höhere Arbeitshöhe zu einem Anstieg der Schichthöhe führt.

Hinsichtlich der Erstellung von Erntegutschichten innerhalb des Silos kann es weiterhin von besonderem Vorteil sein, wenn die Verdichtungsmaschinen das Erntegut in Abhängigkeit mindestens eines Gutparameters autonom einer noch zu erstellenden oder einer bereits im Entstehen begriffenen Erntegutschicht zuordnen. Bei diesem Verfahren ist die Verteilfunktion der autonomen Verdichtungsmaschine nicht lediglich auf ein reines Verteilen von Erntegut in dem Silo beschränkt, sondern um eine strategische Planung im Hinblick auf das als nächstes zu verbauende Erntegut erweitert. Dabei nimmt die Verdichtungsmaschine eine Schichtung des Silos vorzugsweise derart vor, dass eine Einbauhöhe von jeweilig zu verbauenden Erntegut in dem Silo proportional zum Wassergehalt und/oder antiproportional zur durchschnittlichen Partikelgröße des Ernteguts und/oder antiproportional zur Silohöhe vorgenommen wird. Dem liegt die Überlegung zugrunde, dass trockenes Erntegut ebenso wie solches mit vergleichsweise großen bzw. langen Partikeln verhältnismäßig schwierig zu verdichten ist, während feuchtes sowie feines Erntegut vergleichsweise einfach verdichtet werden kann. Schwierig zu verdichtendes Erntegut wird sinnvollerweise in einer niedrigen Erntegutschicht innerhalb des Silos angeordnet, um eine zusätzliche Verdichtungsleistung mittels über der jeweiligen Erntegutschicht befindlicher weiterer Erntegutschichten zu erzeugen.

Soweit mehrere autonome Verdichtungsmaschinen zum Einsatz kommen und mindestens eine der Verdichtungsmaschinen neben ihrer Verdichtungsfunktion ferner eine Verteilfunktion erfüllt, ist es besonders von Vorteil, wenn zumindest letztgenannte Verdichtungsmaschine ausschließlich eine Verteilfunktion erfüllt, während die mindestens eine weitere Verdichtungsmaschine ausschließlich eine Verdichtungsfunktion erfüllt. Vorzugsweise werden genau zwei Verdichtungsmaschine verwendet, wobei genau eine ausschließlich für die Verteilung von einzubringenden Erntegut verantwortlich ist, während die andere ausschließlich die Verdichtung des Ernteguts bewerkstelligt. Hierbei versteht es sich, dass die die Verteilfunktion ausübende Verdichtungsmaschine im Zuge der Verteilung des Ernteguts innerhalb des Silos bereits in dem Silo befindliches Erntegut überfährt und somit notgedrungener Maßen zur Verdichtung desselben beiträgt. Gleichwohl besteht die Aufgabe besagter Verdichtungsmaschine ausschließlich in der Verteilung des Ernteguts innerhalb des Silos.

Vorteilhafterweise werden diejenigen Verdichtungsmaschinen, die ausschließlich die Verteilfunktion wahrnehmen, benachteiligt behandelt bzw. als Slave konfiguriert. Die übrigen Verdichtungsmaschinen werden demgegenüber bevorzugt behandelt bzw. als Master konfiguriert. Auf diese Weise wird eine zügige Verdichtung des Ernteguts innerhalb des Silos sichergestellt. Eine Hierarchie zwischen den zur Verdichtung vorgesehenen Verdichtungsmaschinen ist gleichermaßen denkbar.

Das erfindungsgemäße Verfahren wird nachstehend anhand von Ausführungsbeispielen, die in den Figuren dargestellt sind, näher erläutert. Es zeigt:
- Fig. **1**:: Eine Draufsicht auf ein Silo mit zwei autonomen Verdichtungsmaschinen,
- Fig. 2:: Eine Draufsicht auf das Silo gemäß Figur 1 sowie einen zu erntenden Schlag mitsamt einem Erntefahrzeug und
- Fig. 3:: Einen Querschnitt durch das Silo gemäß Figur **1**.

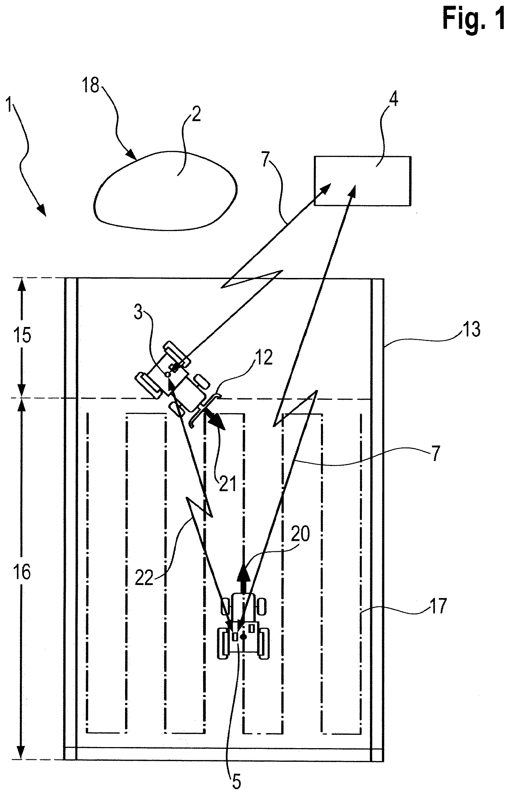

Das erfindungsgemäße Verfahren ist anhand eines in den **Figuren 1 bis 3** dargestellten Ausführungsbeispiels veranschaulicht. Dieses umfasst ein Silo 1, in dem Erntegut **2** gelagert werden soll. Hierzu wird das Erntegut **2** mittels zweier autonomer Verdichtungsmaschinen **3, 5** in dem Silo **1** verteilt und dort verdichtet. Die autonomen Verdichtungsmaschinen **3, 5** werden mittels einer Steuerungseinrichtung **4** gesteuert, wobei die Verdichtungsmaschinen **3, 5** jeweils mittels einer kabellosen Datenverbindung **7** mit der Steuerungseinrichtung **4** verbunden sind. Zudem sind die Verdichtungsmaschinen **3, 5** untereinander mittels einer drahtlosen Datenverbindung **22** verbunden. Die Steuerungseinrichtung **4** ist in dem gezeigten Beispiel neben der Siloeinrichtung **1** errichtet. In dem in **Figur 1** beispielhaft dargestellten Moment bewegen sich die Verdichtungsmaschinen **3**, **5** gerade in Richtung der in **Figur 1** dargestellten Pfeile **20, 21**

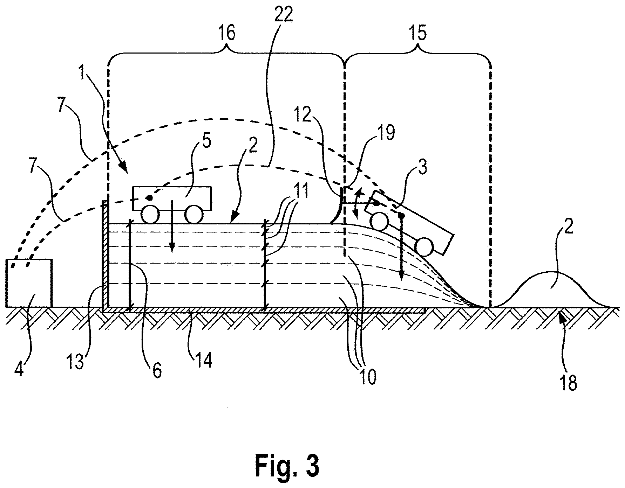

Das Silo **1** ist hier in Form eines im Grundriss U-förmigen Flachsilos ausgeführt, das an drei seiner vier Ränder mittels Silowänden **13** begrenzt ist. Zudem ist das Silo **1** an seiner Unterseite zum Erdreich hin mittels eines Silobodens **14** ausgestattet. Die baulichen Elemente des Silos **1** ergeben sich besonders gut anhand des Querschnitts gemäß **Figur 3**. Dort ist ferner ein geschichteter Aufbau des in dem Silo **1** befindlichen Ernteguts **2** erkennbar. In dem gezeigten Zustand ist das Silo **1** bereits fast vollständig verfüllt. Das Erntegut wird mittels der eine Verteileinrichtung **12** umfassenden Verdichtungsmaschine **3** autonom innerhalb des Silos **1** verteilt, wobei der Einbau des Ernteguts **2** schichtweise erfolgt. Das heißt, dass jeweils eine Erntegutschicht **10** erzeugt wird, die vor der Einbringung einer weiteren, darüber befindlichen Erntegutschicht **10** zunächst mittels der Verdichtungsmaschinen **3, 5** verdichtet wird. Jede der Erntegutschichten **10** weist schließlich eine Schichthöhe **11** auf, wobei die Summe sämtlicher Schichttönen **11** insgesamt die Silohöhe **6** ergibt. Es versteht sich, dass letztere sich während des Verfahrens fortwährend steigert, bis schließlich das Silo **1** vollständig gefüllt ist. Die Verteileinrichtung **12** der Verdichtungsmaschine **3** ist hier von einem Schiebeschild gebildet.

Die Erntegutschichten **10** bzw. deren Schichthöhen **11** werden in Abhängigkeit ihrer Lage innerhalb des Silos **1** gesteuert, wobei typischerweise weiter unten gelegene Erntegutschichten **10** eine größere Schichthöhe **11** aufweisen als weiter oben liegende Erntegutschichten **10**. Dies liegt darin begründet, dass die weiter unten gelegenen Erntegutschichten **10** zusätzlich zu der Verdichtungsleistung, die mittels der Gewichtskraft der Verdichtungsmaschinen **3, 5** als solcher aufgebracht wird (in **Figur 3** mittels nicht näher bezeichneter Pfeile veranschaulicht), ferner mittels der Gewichtskraft der darüber befindlichen Erntegutschichten **10** verdichtet werden. Die Regulierung der Schichthöhe **11** kann besonders einfach mittels der Verteileinrichtung **12** der Verdichtungsmaschine **3** erfolgen, wobei eine Arbeitsstellung der Verteileinrichtung **12** insbesondere mittels der Steuerungseinrichtung **4** gesteuert werden kann. In dem gezeigten Beispiel ist dies dadurch realisiert, dass die Verteileinrichtung **12** um eine Drehachse drehbar an der Verdichtungsmaschine **3** gelagert ist, sodass die Verteileinrichtung **12** gemäß eines in **Figur 3** dargestellten Doppelpfeils **19** auf und ab bewegt werden kann. Die Einstellung der Arbeitsstellung der Verteileinrichtung **12** entspricht somit in dem gezeigten Beispiel der Einstellung einer Arbeitshöhe desselben.

In unmittelbarer Nähe zu dem Silo **1** befindet sich eine Anlieferungsstelle **18,** an der Transportfahrzeuge **23** Erntegut **2** anliefern, das in das Silo **1** eingebracht werden soll. Typischerweise wird das Erntegut **2** an der Anlieferungsstelle **18** lediglich lose abgeschüttet und sodann in dem Silo **1** verteilt. Die Verdichtungsmaschinen **3, 5** sind in dem gezeigten Beispiel derart konfiguriert, dass eine erste Verdichtungsmaschine **3,** die mit einer Verteileinrichtung **12** ausgestattet ist, neben einer Verdichtungsfunktion ferner eine Verteilfunktion erfüllt. Das heißt, dass die Verdichtungsmaschine **3** das an der Anlieferungsstelle **18** angelieferte Erntegut **2** autonomen in das Silo **1** transportiert und dort entsprechend einer Vorgabe der Steuerungseinrichtung **4** verteilt. Dabei sorgt die Verdichtungsmaschine **3** typischerweise dafür, dass das Erntegut **2** gleichmäßig über die Fläche des Silos **1** verteilt wird, sodass sich eine zumindest im Wesentlichen gleichmäßige Schichthöhe **11** einer jeweils im Entstehen begriffenen Erntegutschicht **10** ausbildet.

Die andere Verdichtungsmaschine **5** erfüllt hier keine Verteilfunktion, sondern lediglich und ausschließlich eine Verdichtungsfunktion. In dem gezeigten Beispiel wird sie mittels der Steuerungseinrichtung **4** derart gesteuert, dass sie entlang einer Fahrroute **17** das Silo **1** überfährt, wobei sie durch Wirkung ihrer Eigengewichtskraft das Erntegut **2** verdichtet. Ein Bereich, in dem die zweite Verdichtungsmaschine **5** wirkt, ist hier beispielhaft auf einen Plateaubereich **16** des Silos **1** beschränkt, in dem eine Oberfläche des Ernteguts **2** zumindest im Wesentlichen eben ausgeformt ist. Zu einer offenen Seite des Silos 1 hin an den Plateaubereich **16** anschließend befindet sich ein Rampenbereich **15,** in dem ein Höhenniveau des Ernteguts **2** bis auf ein Höhenniveau einer Geländeoberkante abfällt. Der Rampenbereich **15** ist erforderlich, damit die Verdichtungsmaschinen **3, 5** das Silo **1** befahren können. Er bildet sich automatisch mit zunehmendem Anstieg der Silohöhe **6** aus.

In dem gezeigten Beispiel sind beide Verdichtungsmaschinen **3, 5** jeweils mit einem in den Figuren nicht dargestellten Sensor ausgestattet, der es ihnen ermöglicht, verschiedene Gutparameter des Ernteguts 2 zu erfassen. Hier wird beispielhaft ein Rückstellverhalten des Ernteguts **2** mittels der Verdichtungsmaschinen **3, 5** untersucht. Dieses Rückstellverhalten, das im Prinzip eine Rückverformung zuvor komprimierten Ernteguts **2** entspricht, lässt einen Rückschluss über die Verdichtbarkeit des Ernteguts **2** zu. Die mittels der Sensoren erfassten Daten werden mittels der Datenverbindungen **7** an die Steuerungseinrichtung **4** übermittelt, die auf Basis dieser Daten Arbeitsabläufe der Verdichtungsmaschinen **3, 5** erstellt. Letztere werden wiederum den Verdichtungsmaschinen **3, 5** mittels der Datenverbindungen **7** mitgeteilt, worauf hin selbige ihren autonomen Betrieb entsprechend fortsetzen. Insbesondere ist es denkbar, dass die Steuerungseinrichtung **4** einen veranschlagten Verdichtungszeitraum in Abhängigkeit von dem hier beispielhaft erfassten Gutparameter "Rückstelleigenschaft" verändert, um die Verdichtung des Ernteguts in jedem Falle ausreichend sicherzustellen, gleichzeitig jedoch eine Verdichtung über das erforderliche Maß hinaus zu vermeiden. Ebenso ist es denkbar, dass die Fahrrouten der Verdichtungsmaschinen **3, 5** angepasst werden, um eine Verdichtungsleistung derselben beispielsweise auf einen bestimmten Bereich zu konzentrieren. Selbstverständlich sind allerlei weitere automatisch stattfindende Einflüsse der Steuerungseinrichtung **4** auf den Betrieb der Verdichtungsmaschinen **3, 5** ohne Weiteres denkbar.

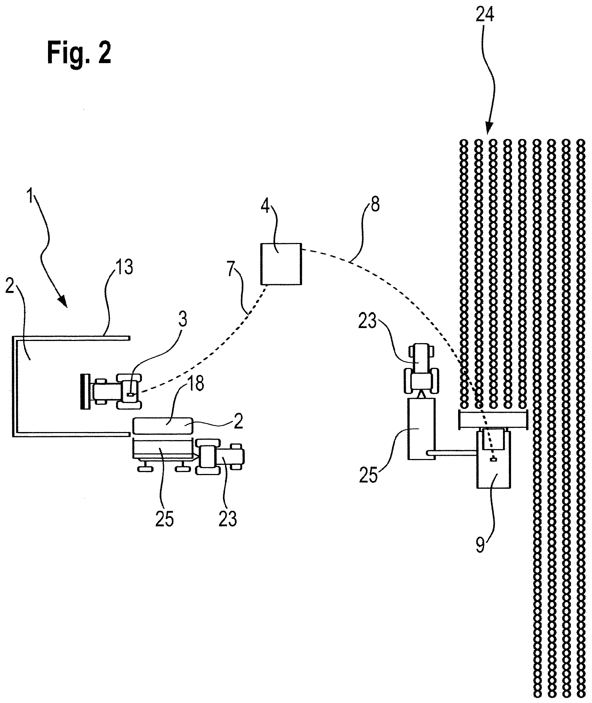

Wie sich insbesondere anhand der Darstellung gemäß **Figur 2** ergibt, ist die Steuerungseinrichtung **4** zusätzlich zu ihrer Verbindung mit den Verdichtungsmaschinen **3, 5** ferner mit einem Erntefahrzeug **9** mittels einer kabellosen Datenverbindung **8** verbunden. Das Erntefahrzeug **9** hier in Form eines Feldhäckslers ausgebildet, der in dem gezeigten Beispiel dazu konfiguriert ist, in einem Schlag befindliche Maispflanzen **24** zu häckseln. Die gehäckselten Maispflanzen **24** bilden sodann das Erntegut **2,** welches unmittelbar von dem Erntefahrzeug **9** auf einen Transportwagen **25** geleitet wird, der mittels eines Transportfahrzeugs **23** sodann zu dem Silo 1 gefahren wird. Dort wird der Transportwagen **25** an der Anlieferungsstelle **18** geleert.

Die Verbindung der Steuerungseinrichtung **4** sowohl mit den Verdichtungsmaschinen **3, 5,** von denen in **Figur 2** vereinfacht lediglich die erste Verdichtungsmaschine **3** dargestellt ist, als auch mit dem Erntefahrzeug **9** hat den besonderen Vorteil, dass Silodaten des Silos **1** unmittelbar Einfluss auf Betriebsparameter des Erntefahrzeugs **9** nehmen können. Insbesondere kann in Abhängigkeit eines Arbeitsfortschritts in dem Silo **1** die Steuerungseinrichtung **4** eine Information an das Erntefahrzeug **9** übermitteln, aus der beispielsweise ein Maschinenführer des Erntefahrzeugs **9** Handlungen zum weiteren Betrieb der Ernte ableiten kann. Ebenso ist es denkbar, dass die Steuerungseinrichtung **4** unmittelbar über die Datenverbindung **8** auf mindestens einem Betriebsparameter des Erntefahrzeugs **9** einwirkt.

Vorstehend in Verbindung mit dem Ausführungsbeispiel beschriebene Merkmale können grundsätzlich auch unabhängig voneinander vorteilhaft wirken und sind nicht auf die hier beschriebene Merkmalskombination angewiesen.

### Bezugszeichenliste

- 1: Silo
- 2: Erntegut
- 3: Verdichtungsmaschine
- 4: Steuerungseinrichtung
- 5: Verdichtungsmaschine
- 6: Silohöhe
- 7: Datenverbindung
- 8: Datenverbindung
- 9: Erntefahrzeug
- 10: Erntegutschicht
- 11: Schichthöhe
- 12: Verteileinrichtung
- 13: Silowand
- 14: Siloboden
- 15: Rampenbereich
- 16: Plateaubereich
- 17: Fahrroute
- 18: Anlieferungsstelle
- 19: Doppelpfeil
- 20: Pfeil
- 21: Pfeil
- 22: Datenverbindung
- 23: Transportfahrzeug
- 24: Maispflanzen
- 25: Transportwagen

## Patentansprüche

1. Verfahren zur Befüllung eines Silos (1) mit zu lagerndem Erntegut (2), insbesondere eines Flachsilos mit gehäckseltem Mais, umfassend die folgenden Verfahrensschritte:
a) Das zu lagernde Erntegut (2) wird in dem Silo (1) verteilt.
b) Das in dem Silo (1) befindliche Erntegut (2) wird mittels mindestens einer Verdichtungsmaschine (3, 5) zumindest für die Dauer eines Verdichtungszeitraums fortwährend überfahren, wobei zumindest eine Gewichtskraft der Verdichtungsmaschine (3, 5) auf das Erntegut (2) einwirkt.
c) Mittels Wirkung der Gewichtskraft der Verdichtungsmaschine (3, 5) wird das Erntegut (2) verdichtet,
**gekennzeichnet durch**
den folgenden Verfahrensschritt:
d) Zumindest innerhalb des Verdichtungszeitraums wird die Verdichtungsmaschine (3, 5) autonom betrieben, wobei die Verdichtungsmaschine (3, 5) mittels mindestens einer Steuerungseinrichtung (4) gesteuert wird, wobei die Verdichtungsmaschine vollständig ohne den Eingriff menschlicher Verstandestätigkeit eigenständig agiert, wobei die Steuerungseinrichtung (4) die Verdichtungsmaschine (3, 5) in Abhängigkeit mindestens eines ermittelten Siloparameters, nämlich einer aktuellen Silohöhe (6) und/oder eines Gutparameters des Ernteguts (2), steuert und, eine Verdichtungsleistung der Verdichtungsmaschine (3, 5) in Abhängigkeit von einem Porenvolumen des Ernteguts (2) verändert, .

2. Verfahren nach Anspruch 1, **dadurch gekennzeichnet, das** das Erntegut (2) mittels einer Mehrzahl, insbesondere mittels zweier, gleichzeitig autonom arbeitender Verdichtungsmaschinen (3, 5) verdichtet wird, die vorzugsweise mittels derselben Steuerungseinrichtung (4) gesteuert werden.

3. Verfahren nach Anspruch 2, **dadurch gekennzeichnet, dass** die Verdichtungsmaschinen (3, 5) jeweils Arbeitsdaten, insbesondere Sensordaten und/oder Bewegungsdaten, an die Steuerungseinrichtung (4) übermitteln, wobei mittels der Steuerungseinrichtung (4) Arbeitsabläufe der Verdichtungsmaschinen (3, 5), insbesondere deren Fahrrouten (17), in Abhängigkeit der übermittelten Arbeitsdaten koordiniert werden.

4. Verfahren nach Anspruch 2 oder 3, **dadurch gekennzeichnet, dass** eine der Verdichtungsmaschinen (3) gegenüber den übrigen Verdichtungsmaschinen (5) von der Steuerungseinrichtung (4) derart bevorzugt behandelt wird, dass im Falle eines Konflikts zwischen Arbeitsabläufen der Verdichtungsmaschinen (3, 5) der Arbeitsablauf der bevorzugten Verdichtungsmaschine (3) Vorrang vor den Arbeitsabläufen der benachteiligten Verdichtungsmaschinen (5) hat, insbesondere ein Arbeitsablauf einer jeweiligen benachteiligen Verdichtungsmaschine (5) im Falle eines Konflikts zum Vorteil des Arbeitsablaufs der bevorzugten Verdichtungsmaschine (3) zumindest zeitweise unterbrochen wird.

5. Verfahren nach einem der Ansprüche 1 bis 4, wobei die Verdichtungsmaschine (3, 5) mindestens einen Sensor zur Ermittlung mindestens eines Gutparameters des Ernteguts (2) umfasst, insbesondere zur Ermittlung
- eines Rückstellverhaltens des Ernteguts (2),
- einer Dichte des Ernteguts (2),
- einem Porenvolumen des Ernteguts (2),
- einem Wassergehalt des Ernteguts (2),
- einer Trockenmasse des Ernteguts (2) und/oder
- einer durchschnittlichen Partikelgröße des Ernteguts (2),
**dadurch gekennzeichnet, dass**
mindestens ein Gutparameter des Ernteguts (2) mittels der Verdichtungsmaschine (3, 5) ermittelt und an die Steuerungseinrichtung (4) übermittelt wird.

6. Verfahren nach Anspruch 5, **dadurch gekennzeichnet, dass** die Steuerungseinrichtung (4) auf Basis mindestens eines Gutparameters einen Verdichtungsbedarf des zu verdichtenden Ernteguts (2) ermittelt und vorzugsweise den Verdichtungszeitraum entsprechend veranschlagt.

7. Verfahren nach einem der Ansprüche 1 bis 6, wobei die Steuerungseinrichtung (4) eine Datenverbindung (8) mit mindestens einem Erntefahrzeug (9) aufweist, mittels dessen das Erntegut (2) produziert wird, **dadurch gekennzeichnet, dass** die Steuerungseinrichtung (4) in Abhängigkeit mindestens eines Siloparameters, insbesondere einer aktuellen Silohöhe (6) und/oder eines Gutparameters, zumindest eine Information an einen Maschinenführer des Erntefahrzeugs (9) absetzt, vorzugsweise unmittelbar mindestens einen Betriebsparameter des Erntefahrzeugs (9) verändert, insbesondere dessen Arbeitsgeschwindigkeit und/oder eine zu erzeugende Partikelgröße des Ernteguts (2).

8. Verfahren nach Anspruch 7, **dadurch gekennzeichnet, dass** die Steuerungseinrichtung (4) in Abhängigkeit von einer Verdichtungsdauer, die die Verdichtungsmaschine (3, 5) zum Erreichen eines vorgegebenen Verdichtungsergebnisses einer jeweiligen Erntegutschicht (10) des Silos (1) benötigt, Daten an das Erntefahrzeug (9) übermittelt, wobei vorzugsweise die Steuerungseinrichtung (4) zumindest mittelbar auf eine Anpassung der Arbeitsgeschwindigkeit des Erntefahrzeugs (9) hinwirkt.

9. Verfahren nach einem der Ansprüche 1 bis 8, **dadurch gekennzeichnet, dass** die Verdichtungsmaschine (3, 5) autonom bereits angeliefertes, jedoch noch unverdichtetes Erntegut (2) derart in dem Silo (1) verteilt, dass sich eine unverdichtete Erntegutschicht (10) bildet, wobei die Verdichtungsmaschine (3, 5) nach Erreichen einer bestimmten Schichthöhe (11) der unverdichteten Erntegutschicht (10) automatisch mit der Verdichtung derselben beginnt.

10. Verfahren nach Anspruch 9, **dadurch gekennzeichnet, dass** die Schichthöhe (11) einer jeweiligen Erntegutschicht (10) in Abhängigkeit mindestens eines Gutparameters, insbesondere eines Wassergehalts des Ernteguts (2) und/oder einer durchschnittlichen Partikelgröße des Ernteguts (2), gesteuert wird.

11. Verfahren nach Anspruch 9 oder 10, wobei die Verdichtungsmaschine (3, 5) mindestens eine Verteileinrichtung (12), vorzugsweise in Form eines Schiebeschilds, aufweist, **dadurch gekennzeichnet, dass** Steuerungseinrichtung (4) eine Arbeitsstellung der Verteileinrichtung (12) steuert, insbesondere in Abhängigkeit einer zu erreichenden Schichthöhe (11) der jeweiligen Erntegutschicht (10).

12. Verfahren nach einem der Ansprüche 9 bis 11, **dadurch gekennzeichnet, dass** die Verdichtungsmaschine (3, 5) zu verteilendes Erntegut (2) in Abhängigkeit mindestens eines Gutparameters, insbesondere in Abhängigkeit eines Wassergehalts des Ernteguts (2) und/oder einer durchschnittlichen Partikelgröße des Ernteguts (2), autonom einer noch zu erstellenden oder bereits im Entstehen begriffenen Erntegutschicht (10) zuordnet, wobei vorzugsweise die Verdichtungsmaschine (3, 5) eine Schichtung des Silos (1) derart vornimmt, dass eine Einbauhöhe jeweiligen Ernteguts (2) in dem Silo (1) proportional zum Wassergehalt und/oder antiproportional zur durchschnittlichen Partikelgröße des Ernteguts (2) vorgenommen wird.

13. Verfahren nach einem der Ansprüche 2 bis 4 in Kombination mit einem der Ansprüche 9 bis 12, **dadurch gekennzeichnet, dass** mindestens eine Verdichtungsmaschine (3) ausschließlich eine Verteilfunktion für zu verteilendes Erntegut (2) und mindestens eine andere Verdichtungsmaschine (5) ausschließlich eine Verdichtungsfunktion erfüllen, wobei vorzugsweise die mindestens eine die Verteilfunktion erfüllende Verdichtungsmaschine (3) gegenüber der mindestens einen die Verdichtungsfunktion erfüllenden Verdichtungsmaschine (5) von der Steuerungseinrichtung (4) benachteiligt behandelt wird.

## Claims

1. A method for filling a silo (1) with harvested material (2) to be stored, in particular a flat silo with chopped corn, comprising the following steps of the method:
a) the harvested material (2) to be stored is distributed in the silo (1),
b) the harvested material (2) in the silo (1) is continuously driven over by means of at least one compacting machine (3, 5) for at least the duration of a compacting period, wherein at least a force due to the weight of the compacting machine (3, 5) acts on the harvested material (2),
c) the harvested material (2) is compacted by means of the action of the force due to the weight of the compacting machine (3, 5),
**characterized by** the following step of the method:
d) the compacting machine (3, 5) is operated autonomously at least within the compacting period, wherein the compacting machine (3, 5) is controlled by means of at least one control device (4), wherein the compacting machine acts independently entirely without the intervention of human mental activity, wherein the control device (4) controls the compacting machine (3, 5) as a function of at least one ascertained silo parameter, namely a current silo height (6) and/or a crop parameter of the harvested material (2), and changes a compacting power of the compacting machine (3, 5) as a function of a pore volume of the harvested material (2).

2. The method according to claim 1, **characterized in that** the harvested material (2) is compacted by means of a plurality of, in particular by means of two simultaneously autonomously operating compacting machines (3, 5) which are preferably controlled by means of the same control device (4).

3. The method according to claim 2, **characterized in that** the compacting machines (3, 5) respectively transmit working data, in particular sensor data and/or movement data, to the control device (4), wherein working procedures of the compacting machines (3, 5), in particular the travel routes (17) thereof, are coordinated by means of the control device (4) as a function of the transmitted working data.

4. The method according to claim 2 or claim 3, **characterized in that** one of the compacting machines (3) is treated preferentially by the control device (4) in comparison to the other compacting machines (5) in such a manner that in the case of a conflict between working procedures of the compacting machines (3, 5), the working procedure of the preferred compacting machine (3) has precedence over the working procedures of the disadvantaged compacting machines (5), in particular a working procedure of a respective disadvantaged compacting machine (5) is at least temporarily interrupted in the case of a conflict to the advantage of the working procedure of the preferred compacting machine (3).

5. The method according to one of claims 1 to 4, wherein the compacting machine (3, 5) comprises at least one sensor for ascertaining at least one crop parameter of the harvested material (2), in particular for ascertaining:
- a restoring behaviour of the harvested material (2),
- a density of the harvested material (2),
- a pore volume of the harvested material (2),
- a water content of the harvested material (2),
- a dry mass of the harvested material (2) and/or
- an average particle size of the harvested material (2),
**characterized in that** at least one crop parameter of the harvested material (2) is ascertained by means of the compacting machine (3, 5) and transmitted to the control device (4).

6. The method according to claim 5, **characterized in that** the control device (4) ascertains a compacting requirement for the harvested material (2) to be compacted on the basis of at least one crop parameter and preferably correspondingly estimates the compacting period.

7. The method according to one of claims 1 to 6, wherein the control device (4) has a data link (8) with at least one harvesting vehicle (9), by means of which the harvested material (2) is produced, **characterized in that** as a function of at least one silo parameter, in particular a current silo height (6) and/or a harvested material parameter, the control device (4) sends at least one item of information to a machine operator of the harvesting vehicle (9), and preferably directly changes at least one operating parameter of the harvesting vehicle (9), in particular its working speed and/or a particle size of the harvested material (2) to be produced.

8. The method according to claim 7, **characterized in that** the control device (4) transmits data to the harvesting vehicle (9) as a function of a compacting period required by the compacting machine (3, 5) in order to obtain a predetermined compacting result for a respective harvested material layer (10) in the silo (1), wherein preferably, the control device (4) works at least indirectly towards adaptation of the working speed of the harvesting vehicle (9).

9. The method according to one of claims 1 to 8, **characterized in that** the compacting machine (3, 5) autonomously distributes harvested material (2) which has already been supplied but is still uncompacted in the silo (1) in such a manner that an uncompacted harvested material layer (10) is formed, wherein after reaching a given layer height (11) of the uncompacted harvested material layer (10), the compacting machine (3, 5) automatically begins with compaction thereof.

10. The method according to claim 9, **characterized in that** the layer height (11) of a respective layer of harvested material (10) is controlled as a function of at least one crop parameter, in particular a water content of the harvested material (2) and/or an average particle size of the harvested material (2).

11. The method according to claim 9 or claim 10, wherein the compacting machine (3, 5) has at least one distribution device (12), preferably in the form of a pusher plate, **characterized in that** the control device (4) controls a working position of the distribution device (12), in particular as a function of a layer height (11 of the respective harvested material layer (10) which is to be reached.

12. The method according to one of claims 9 to 11, **characterized in that** as a function of at least one harvested material parameter, in particular as a function of a water content of the harvested material (2) and/or an average particle size of the harvested material (2), the compacting machine (3, 5) autonomously allocates harvested material (2) to be distributed to a harvested material layer (10) which is still to be produced or which is already in the process of being produced, wherein preferably, the compacting machine (3, 5) carries out layering of the silo (1) in such a manner that an installed height of the respective harvested material (2) in the silo (1) is proportional to the water content and/or inversely proportional to the average particle size of the harvested material (2).

13. The method according to one of claims 2 to 4 in combination with one of claims 9 to 12, **characterized in that** at least one compacting machine (3) exclusively carries out a distribution function for harvested material (2) to be distributed and at least one other compacting machine (5) exclusively carries out a compacting function, wherein preferably, the at least one compacting machine (3) carrying out the distribution function is treated by the control device (4) in a disadvantaged manner in comparison to the at least one compacting machine (5) carrying out the compacting function.

## Revendications

1. Procédé de remplissage d'un silo (1) avec du produit récolté à stocker (2), en particulier d'un silo plat avec du maïs haché, comprenant les étapes de procédé suivantes :
a) le produit récolté à stocker (2) est réparti dans le silo (1),
b) le produit récolté (2) se trouvant dans le silo (1) est parcouru en continu au moyen d'au moins une machine de compactage (3, 5) au moins pour la durée d'un intervalle de temps de compactage, au moins un poids de la machine de compactage (3, 5) agissant sur le produit récolté (2),
c) le produit récolté (2) est compacté au moyen de l'action du poids de la machine de compactage (3, 5),
**caractérisé par**
l'étape de procédé suivante :
d) au moins à l'intérieur de l'intervalle de temps de compactage, la machine de compactage (3, 5) est exploitée de façon autonome, la machine de compactage (3, 5) étant commandée au moyen d'au moins un équipement de commande (4), la machine de compactage agissant de façon entièrement autonome sans intervention d'une faculté d'entendement humaine, l'équipement de commande (4) commandant la machine de compactage (3, 5) en fonction d'au moins un paramètre de silo déterminé, à savoir d'une hauteur de silo instantanée (6) et/ou d'un paramètre de produit du produit récolté (2), et modifie une capacité de compactage de la machine de compactage (3, 5) en fonction d'un volume de pores du produit récolté (2).

2. Procédé selon la revendication 1, **caractérisé en ce que** le produit récolté (2) est compacté au moyen d'une pluralité, en particulier au moyen de deux, de machines de compactage fonctionnant de manière simultanée et autonome (3, 5) qui sont commandées de préférence au moyen du même équipement de commande (4).

3. Procédé selon la revendication 2, **caractérisé en ce que** les machines de compactage (3, 5) transmettent respectivement des données de travail, en particulier des données de capteur et/ou des données de déplacement, à l'équipement de commande (4), l'équipement de commande (4) permettant de coordonner des séquences de travail des machines de compactage (3, 5), en particulier leurs itinéraires (17), en fonction des données de travail transmises.

4. Procédé selon la revendication 2 ou 3, **caractérisé en ce qu'**une des machines de compactage (3) fait l'objet, par rapport aux autres machines de compactage (5), d'un traitement avantageux de la part de l'équipement de commande (4), de façon qu'en cas de conflit entre des séquences de travail des machines de compactage (3, 5), la séquence de travail de la machine de compactage avantagée (3) ait priorité sur les séquences de travail des machines de compactage désavantagées (5), en particulier de façon qu'en cas de conflit, une séquence de travail d'une machine de compactage désavantagée respective (5) soit interrompue au moins temporairement en faveur de la séquence de travail de la machine de compactage avantagée (3).

5. Procédé selon une des revendications 1 à 4, la machine de compactage (3, 5) comprenant au moins un capteur pour déterminer au moins un paramètre de produit du produit récolté (2), en particulier pour déterminer
- un comportement de retour élastique du produit récolté (2),
- une densité du produit récolté (2),
- un volume de pores du produit récolté (2),
- une teneur en eau du produit récolté (2),
- une masse sèche du produit récolté (2) et/ou
- une grosseur particulaire moyenne du produit récolté (2),
**caractérisé en ce qu'**au moins un paramètre de produit du produit récolté (2) est déterminé au moyen de la machine de compactage (3, 5) et transmis à l'équipement de commande (4).

6. Procédé selon la revendication 5, **caractérisé en ce que,** sur la base d'au moins un paramètre de produit, l'équipement de commande (4) détermine un besoin de compactage du produit récolté à compacter (2) et, de préférence, estime l'intervalle de temps de compactage en conséquence.

7. Procédé selon une des revendications 1 à 6, l'équipement de commande (4) comportant une liaison de données (8) avec au moins un véhicule de récolte (9) avec lequel le produit récolté (2) est produit, **caractérisé en ce que,** en fonction d'au moins un paramètre de silo, en particulier d'une hauteur de silo instantanée (6) et/ou d'un paramètre de produit, l'équipement de commande (4) envoie au moins une information à un conducteur de machine d'un véhicule de récolte (9), de préférence modifie directement au moins un paramètre d'exploitation du véhicule de récolte (9), en particulier sa vitesse de travail et/ou une grosseur particulaire à obtenir du produit récolté (2).

8. Procédé selon la revendication 7, **caractérisé en ce que,** en fonction d'une durée de compactage nécessaire à la machine de compactage (3, 5) pour atteindre un résultat de compactage prédéfini d'une couche de produit récolté respectif (10) du silo (1), l'équipement de commande (4) transmet des données au véhicule de récolte (9), de préférence l'équipement de commande (4) agissant au moins indirectement sur une adaptation de la vitesse de travail du véhicule de récolte (9).

9. Procédé selon une des revendications 1 à 8, **caractérisé en ce que** la machine de compactage (3, 5) répartit dans le silo (1) de façon autonome du produit récolté (2) déjà livré mais encore non compacté, de façon qu'une couche de produit récolté non compactée (10) se forme, la machine de compactage (3, 5) commençant automatiquement à compacter la couche de produit récolté non compactée (10) après atteinte d'une hauteur de couche déterminée (11).

10. Procédé selon la revendication 9, **caractérisé en ce que** la hauteur de couche (11) d'une couche de produit récolté respective (10) est commandée en fonction d'au moins un paramètre de produit, en particulier d'une teneur en eau du produit récolté (2) et/ou d'une grosseur particulaire moyenne du produit récolté (2).

11. Procédé selon la revendication 9 ou 10, la machine de compactage (3, 5) comportant au moins un équipement de répartition (12), de préférence en forme de lame, **caractérisé en ce que** l'équipement de commande (4) commande une position de travail de l'équipement de répartition (12), en particulier en fonction d'une hauteur de couche à atteindre (11) de la couche de produit récolté respective (10).

12. Procédé selon une des revendications 9 à 11, **caractérisé en ce que,** en fonction d'au moins un paramètre de produit, en particulier en fonction d'une teneur en eau du produit récolté (2) et/ou d'une grosseur particulaire moyenne du produit récolté (2), la machine de compactage (3, 5) associe de façon autonome du produit récolté à répartir (2) à une couche de produit récolté (10) encore à réaliser ou déjà en cours de réalisation, de préférence la machine de compactage (3, 5) effectuant une mise en couches du silo (1) de façon qu'une hauteur d'empilage du produit récolté respectif (2) dans le silo (1) soit réalisée de manière proportionnelle à la teneur en eau et/ou de manière inversement proportionnelle à la grosseur particulaire moyenne de produit récolté (2).

13. Procédé selon une des revendications 2 à 4 en combinaison avec une des revendications 9 à 12, **caractérisé en ce qu'**au moins une machine de compactage (3) remplit exclusivement une fonction de répartition de produit récolté à répartir (2) et au moins une autre machine de compactage (5) remplit exclusivement une fonction de compactage, de préférence la au moins une machine de compactage (3) remplissant la fonction de répartition faisant l'objet d'un traitement désavantageux de la part de l'équipement de commande (4) par rapport à la au moins une machine de compactage (5) remplissant la fonction de compactage.
